# EUROPEAN PATENT SPECIFICATION

(11) **EP 1 222 819 B1**
(45) Date of publication and mention of the grant of the patent: **21.07.2004**
(21) Application number: 00973676.0
(22) Date of filing: 19.10.2000
(51) Int. Cl.: H04N 7/167, H04N 7/16, H04N 5/00

(54) **SYSTEM AND METHOD OF VERIFYING AUTHORIZATION FOR COMMUNICATING PROTECTED CONTENT**
SYSTEM UND VERFAHREN ZUM ÜBERPRÜFEN DER BERECHTIGUNG ZUR ÜBERTRAGUNG GESCHÜTZTEN INFORMATIONSINHALTS
SYSTEME ET PROCEDE DE VERIFICATION D'AUTORISATION POUR COMMUNICATION DE CONTENU PROTEGE

(30) Priority: 19.10.1999 US 160355 P
(43) Date of publication of application: 17.07.2002
(73) Proprietor: Thomson Licensing S.A., 92648 Boulogne Cedex (FR)
(72) Inventor: DUFFIELD, David, Jay, Indianapolis, IN 46220 (US); DEISS, Michael, Scott, Zionsville, IN 46007 (US)
(74) Representative: Kohrs, Martin
(86) International application number: PCT/US2000/028942
(87) International publication number: WO 2001/030083

(56) References cited:
- EP-A- 0 858 184
- WO-A-00/56068
- WO-A-99/07150
- WO-A-99/22372
- US-A- 5 420 866
- "FUNCTIONAL MODEL OF A CONDITIONAL ACCESS SYSTEM" , EBU REVIEW- TECHNICAL,BE,EUROPEAN BROADCASTING UNION. BRUSSELS, NR. 266, PAGE(S) 64-77 XP000559450 ISSN: 0251-0936 the whole document

## Description

### Field of Invention

The present invention relates generally to digital audio/video transmission and more particularly to a method for authenticating access to otherwise protected content.

### Background of Invention

Extended Conditional Access (XCA) is a system for protecting digital encoded audio/video (A/V) content during transmission and storage. Under the XCA system, content of economic value is scrambled, or encrypted, to prevent unauthorized access. XCA allows recording of scrambled content, but does not permit descrambling of content that is not legitimate. Legitimate content is that which is an original or otherwise authorized by the copyright owner, for example. Of course, descrambling refers to the process of decryption. Since non-legitimate content is not descrambled, it cannot be viewed.

A distinct characteristic of the XCA architecture is the notion of conditional access (CA) and local protection. CA specifies access to protected content, such as programming. Removable security devices perform security related functions. Content of economic value is delivered using a CA service. For example, digital satellite systems scramble video content and the descrambling keys for mass distribution to their subscribers. Some subscribers may decide to purchase the content in which case they are supplied with the necessary keys to recover/obtain the descrambling key. Those subscribers choosing not to purchase the content are not provided access to these keys. in XCA terminology, this is the process of CA.

XCA systems use a return channel to receive authentication of the local keys and identities that are used for accessing content. This creates a problem in that most devices need to have a return path method of some sort to make this work.

An improved method for authenticating keys and identifiers used to access otherwise protected content in XCA and other systems which exhibit conditional access is desirable.

Conditional Access (CA) systems are well known in the art for providing protection of content (e.g., audio/visual content) transmitted from a service provider (e.g., satellite program provider, cable program provider, etc.) to a system user. The PCT application WO 99/07150 published on Feb.11, 1999 teaches a conditional access system wherein encrypted programs are transmitted from a service provider to one of a plurality of set top boxes. The programs are decrypted using Entitlement Management Messages (EMMs) and Entitlement Control Messages (ECMs) received by the set top box.

### Summary of Invention

A method for verifying that a source device is authorized to communicate otherwise protected content (e.g. scrambled services) to a sink device in a conditional access system, the method including: providing substantially unique identifiers associated with the source and sink devices to a validation authority. The validation authority determines an approval code using data associated with the source and sink devices, the data corresponding to the communicated identifiers; and, the source device determines a local code using the data associated with the source and sink devices, and compares at least a portion of the approval code to at least a portion of the local code for verifying the source device is authorized to communicate the content to the sink device.

### Brief Description of the Figures

Figure 1 illustrates a system according to one aspect of the present invention; and,
Figure 2 illustrates a system according to a second aspect of the present invention.

### Detailed Description of the Invention

According to the present invention, an owner, or user or operator of devices in an XCA system is used as part of a viable return path. A major problem, however, is encountered when utilizing an operator of a device as a return channel. A user cannot be expected to read or enter a 768-bit number accurately. However, large numbers are needed to prevent brute-force cryptanalysis attacks, i.e. trying every possible signature until one works. The problem is verifying that the message, e.g. public key, received is valid. Certificates or signatures used to do this are typically at least 20 bytes in length, and are usually closer to 100 bytes. The signature must have enough possible values to make a brute force attack infeasible. According to the invention, the same goal is accomplished with a much smaller key space by limiting what resources can be used to make a brute force attack.

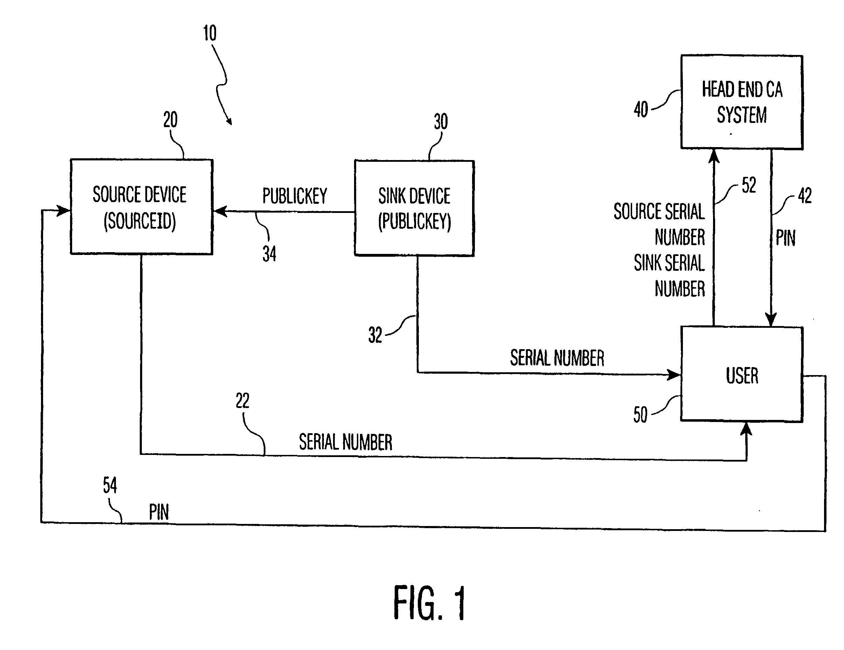

Figure 1 illustrates a system 10 for authenticating access to otherwise protected content. The system 10 includes a source device 20 having an associated identifier (SOURCEID), a sink device having an associated digital key (PUBLICKEY), a user or operator 50 of the source device 20, and a head end CA, or Trusted Third Party (TTP), system 40.

The source device 20 can take the form of an access device such as a satellite set-top box (STB) or media player, such as digital video cassette (DVHS) player or digital versatile disc (DVD) player, while the sink device can take the form of a digital television (DTV).

According to another aspect of the invention both the source device 20 and sink device 30 have publicly accessible serial numbers.

Generally, in order to protect the transmission of content from source device 20 to sink device 30 such that it cannot be illicitly reproduced or otherwise improperly used, the PUBLICKEY of sink device 30 is communicated to source device 20. Content provided to by source device 20 is scrambled using the PUBLICKEY of sink device 30, and transmitted to sink device 30 in scrambled form. The sink device 30 uses the corresponding private key, to unscramble the content and to enable its proper display by the sink device 30. It should also be realized that the above may be accomplished using a two stage process wherein the content is scrambled using a symmetric algorithm, and the control word for this scrambling is sent using the PUBLICKEY.

The PUBLICKEY and SOURCEID of the sink and source devices 30, 20, respectively, are determined by the TTP using the serial numbers of these devices. The determined PUBLICKEY and SOURCEID are then separately used by the devices 20, 30 and TTP to authenticate that the devices 20, 30 may operate in combination to access the content.

The user 50 obtains the serial numbers from the respective source and sink devices 20, 30 (for example, by reading them off the devices) and calls the head end CA system to enable use of the source and sink devices 20, 30 in combination. The user 50 provides these serial numbers to the head end CA system 40 as communication 52. These serial numbers can be provided in a voice communication or electronically, or acoustically for example. The Head End CA system 40 has access to a database that converts the provided serial numbers to SOURCEID and PUBLICKEY data. Hence, the head end CA system 40 can identify the SOURCEID and PUBLICKEY data of the source device 20 and sink device 30 from these communicated serial numbers, e.g. by using a lookup. According to another aspect of the present invention, it is important that the relationship between the serial numbers and SOURCEID is not public, and not readily ascertainable.

In Figure 1, the head end CA system 40 computes a hash code of these two values, e.g. the SOURCEID and PUBLICKEY as an approval hash calculation, and provides it to the user 50 as a Personal Identification Number (PIN) (illustrated as communication 42). The user 50 then enters this PIN into the source device 20 (illustrated as communication 54), which has computed the same hash, e.g., as a local hash calculation using the SOURCEID resident in the source device 20 and PUBLICKEY provided by the sink device 30 (illustrated as communication 34). If the PIN matches the hash, then the source device 20 recognizes that the PUBLICKEY provided in communication 34 from the sink device 30 is valid for use, that the head end CA system 40 has been given this key, and that the head end CA system 40 approves it for use such that the source device 20 and sink device 30 are authorized to operate in combination with one another.

According to another aspect of the present invention, and as set forth, either the SOURCEID and/or the algorithm for computing the hash is kept secret. As will be understood by those possessing an ordinary skill in the pertinent art, the fact that a potential pirate does not have this input to the hash function effectively prevents a brute force attack with a more powerful computer.

According to another aspect of the present invention, the PIN code has a large enough space that an exhaustive search for a valid signature takes prohibitively long. One way of accomplishing this is to have the source device 20 take a significant time to approve the PIN code, either with a complex calculation, or with a waiting period after the computation, for example. A suggested value for this application, e.g., copy protection for a home A/V network, could be a 9 or 10 digit PIN, and a compute time of one second. This would force an average exhaustive search time of 5x10⁸ or 5x10⁹seconds, or approximately 16 or 160 years.

According to an alternative aspect of the present invention, another input to the hash function can be a title code or media, such as a tape or DVD, serial number. This allows for individual titles or tapes to be approved or disapproved for use, for example. One can accomplish significant time savings by storing the serial numbers for a given user 50 in the head end CA system 40 so that the user 50 does not have to provide them for each transaction.

According to another alternative aspect of the present invention, another input to the hash function can be indicative of total running time or elapsed time since the first approval. This allows the approval to automatically expire after a set time or usage. If an extra time code is needed, this can be signaled from the source device 20 to the user 50. The time codes should be sufficiently random such that the user 50 cannot effectively guess or otherwise predict what the next time code will be. If the user 50 were capable of doing this, he could call in beforehand, and essentially pre-authorize his system by getting the PIN codes before they were required.

According to yet another alternative aspect of the present invention, another PIN code based system is based on balkanizing or dividing the key space of local networks into smaller segments without going to the security extreme of using unique per-network keys.

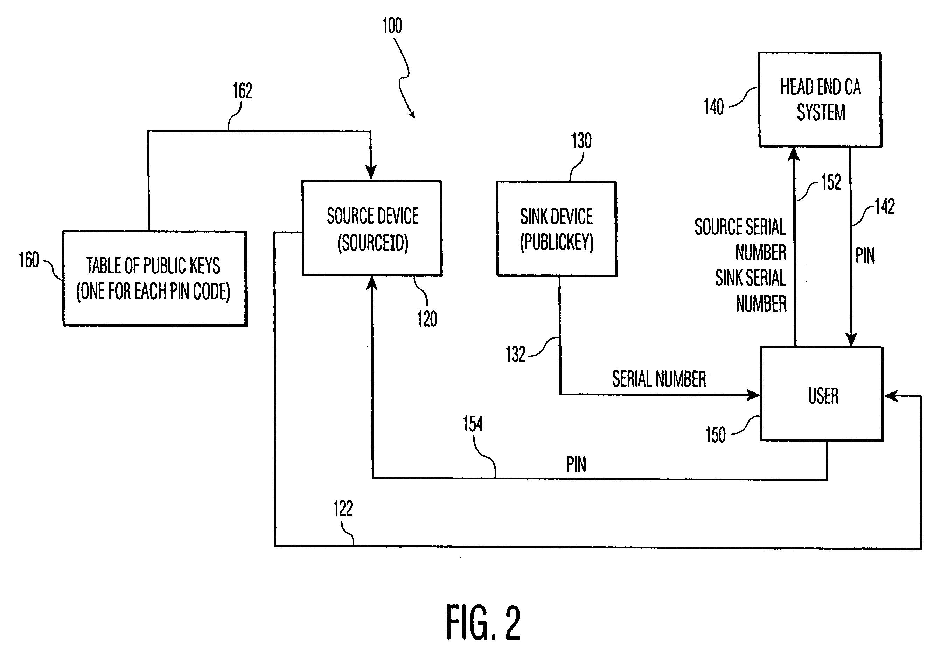

Figure 2 illustrates another system 100 suitable for authenticating keys and identifiers used to access otherwise protected content. The system 100 includes a source device 120 having an associated SOURCEID, a sink device 130 having an associated PUBLICKEY, a user, or operator 150 of the source device 120 and a head end CA system 140.

Sink devices can be made with a relatively small number of private keys, 10,000 for example. The user 150 reads the serial numbers of the sink device 130 and source device 120 (illustrated as communication 132, 122 respectively). The user 150 then calls into the head end CA system 140, provides the serial number of the sink device 130 and source device 120, and receives the PIN code for this sink device 130 (illustrated as communications 152, 142). The PIN code can be determined via a lookup table or appropriate calculation. The user 150 then enters this PIN code into the source device 120 (illustrated as communication 154), and the source device 120 indexes to the correct public key to use for the sink device 130 using a table of public keys 160.

The table of public keys 160 is large compared to the storage of the source device 120 itself. Table 160 is encrypted, and stored at the beginning of prerecorded media (for example, tapes). This provides an easy mechanism for obtaining the public key (PUBLICKEY) when needed, as any prerecorded tape may be used to initialize the network. After that, the system 100 will work on it's own, as the source device 120 will remember the proper key or use with the sink device 130.

Prerecorded media such as tapes are conventionally encrypted with some other, stronger encryption system. In the present invention, only the digital link from source device 120 to sink device 130 is encrypted with this weaker local key. While the local key is not unique to this network, it will be very difficult to profitably make copies of material if 10,000 different versions of the tape are required for each title.

In the event that one of the 10,000 local keys of the above-described system 100 becomes known, "pirate" users might continually use the same PIN code to allow content to be played using any source device 120. System 100 may be improved by making the PIN code a hash function of the SOURCEID, as well as the index into the table of public keys 160. This forces the user 50 to obtain a unique PIN for each source device 120. If an overwhelming number of requests come in for a given public key in the index table 160, then that can be used as a signal that a private key has been compromised.

## Claims

1. A method for verifying that a source device (20), said source device being capable of transmitting protected audio/video content, is authorized to communicate said protected content to a sink device (30), wherein said sink device (30) is capable of descrambling the protected content and displaying the audio/video content from said source device, the method being **characterized by** the steps of:
receiving at said source device (20) an approval code (PIN) determined using data respectively associated with said source and sink devices;
determining separately, in said source device (20), a local code using corresponding data respectively associated with said source device and
said sink device[s] (PUBLICKEY, SOURCEID); and
comparing at least a portion of said approval code (PIN) to at least a portion of said local code, whereby in response to said comparison, said source device verifies authorization for transmitting said protected content to said sink device (30) for descrambling and displaying of said audio/video content.

2. The method according to claim 1, further **characterized in that** said approval code is determined based on a hash calculation using substantially unique identifiers associated with said source and sink devices and wherein said local code is determined based on a hash calculation using data from said sink device and a source identifier prestored in said source device.

3. The method according to claim 2, further **characterized in that** said data associated with said source device for determining said local code is not public information and wherein said data associated with said sink device for determining said local code comprises public information.

4. The method of claim 2, further **characterized in that** said identifiers comprise serial numbers or other identification codes that are accessible to a user, and wherein said data from said sink device used in said hash calculation comprises a public key.

5. The method of claim 2, further **characterized in that** said data associated with said source and sink devices comprises a unique identification of said source device and a public encryption key associated with said sink device.

6. The method of claim 1, further **characterized in that** said source device communicating whether said source device is authorized to provide said content to said sink device to a user, and intentionally communicating whether or not said compared approval code and local code are consistent.

7. The method according to one of the preceding claims, further **characterized in that** said source device is selected from one of an access device and a media player.

## Revendications

1. Procédé de vérification qu'un dispositif source (20), ledit dispositif source étant capable de transmettre du contenu audio/vidéo protégé, est autorisé à communiquer ledit contenu protégé à un dispositif récepteur (30), dans lequel ledit dispositif récepteur (30) est capable de désembrouiller le contenu protégé et d'afficher le contenu audio/vidéo à partir dudit dispositif source, le procédé étant **caractérisé par** les étapes suivantes :
réception au niveau dudit dispositif source (20) d'un code d'approbation (PIN) déterminé à l'aide de données associées respectivement auxdits dispositif source et dispositif récepteur ;
détermination distincte, dans ledit dispositif source (20), d'un code local à l'aide des données correspondantes associées respectivement audit dispositif source et audit dispositif récepteur (CLEPUBLIQUE, IDSOURCE) ; et
comparaison d'au moins une partie dudit code d'approbation (PIN) à au moins une partie dudit code local où, en réponse à ladite comparaison, ledit dispositif source vérifie l'autorisation de transmission dudit contenu protégé audit dispositif récepteur (30) pour le désembrouillage et l'affichage dudit contenu audio/vidéo.

2. Procédé selon la revendication 1, **caractérisé en outre en ce que** ledit code d'approbation est déterminé en fonction d'un calcul de hachage à l'aide d'identificateurs en grande partie uniques associés auxdits dispositif source et dispositif récepteur et dans lequel ledit code local est déterminé en fonction d'un calcul de hachage à l'aide de données provenant dudit dispositif récepteur et d'un identificateur source préstocké dans ledit dispositif source.

3. Procédé selon la revendication 2, **caractérisé en outre en ce que** lesdites données associées audit dispositif source pour déterminer ledit code local ne sont pas des informations publiques et dans lequel lesdites données associées audit dispositif récepteur pour déterminer ledit code local comportent des informations publiques.

4. Procédé selon la revendication 2, **caractérisé en outre en ce que** lesdits identificateurs comportent des numéros de série ou d'autres codes d'identification accessibles à un utilisateur et dans lequel lesdites données provenant dudit dispositif récepteur utilisées dans ledit calcul de hachage comportent une clé publique.

5. Procédé selon la revendication 2, **caractérisé en outre en ce que** lesdites données associées auxdits dispositif source et dispositif récepteur comportent une identification unique dudit dispositif source et une clé de chiffrement publique associée audit dispositif récepteur.

6. Procédé selon la revendication 1, **caractérisé en outre en ce que** ledit dispositif source communiquant si ledit dispositif source est autorisé à fournir ledit contenu audit dispositif récepteur à un utilisateur et communiquant intentionnellement si lesdits code d'approbation et code local comparés sont cohérents.

7. Procédé selon l'une des revendications précédentes, **caractérisé en outre en ce que** ledit dispositif source est sélectionné entre un dispositif d'accès et un lecteur multimédia.

## Patentansprüche

1. Verfahren zur Prüfung, ob ein Quellengerät (20), das zur Übertragung eines geschützten Audio/Video-Inhalts geeignet ist, berechtigt ist, diesen geschützten Inhalt zu einem Senkengerät (30) zu kommunizieren, wobei das Senkengerät (30) in der Lage ist zur Entwürfelung des geschützten Inhalts und zur Wiedergabe des Audio/Video-Inhalts von dem Quellengerät,
**gekennzeichnet durch** folgende Schritte:
Empfang eines Zustimmungs-Codes (PIN) bei dem Quellengerät (20), der unter Anwendung von Daten ermittelt wird, die zu den Quellen- bzw. Senkengerät gehören,
getrennte Ermittlung in dem Quellengerät (20) eines örtlichen Codes **durch** Anwendung entsprechender Daten für das Quellengerät bzw. das Senkengerät (PUBLICKEY, SOURCEID), und
Vergleich wenigstens eines Teils des Zustimmungs-Codes (PIN) mit wenigstens einem Teil des örtlichen Codes, wobei in Abhängigkeit von dem Vergleich das Quellengerät die Berechtigung für die Übertragung des geschützten Inhalts zu dem Senkengerät (30) zur Entwürfelung und Wiedergabe des Audio/Video-Inhalts prüft.

2. Verfahren nach Anspruch 1, **dadurch gekennzeichnet, dass** der Zustimmungs-Code ermittelt wird aufgrund einer Hash-Berechnung unter Anwendung eines von im wesentlichen einzigartigen Identifizierern für das Quellenund Senkengerät, und wobei der örtliche Code auf der Grundlage einer Hash-Berechnung ermittelt wird, durch Anwendung von Daten von dem Senkengerät und einem in dem Quellengerät vorgespeicherten Quellenidentifizierer.

3. Verfahren nach Anspruch 2, **dadurch gekennzeichnet, dass** die Daten für das Quellengerät zur Ermittlung des örtlichen Codes keine öffentlichen Informationen sind, und wobei die Daten für das Senkengerät zur Ermittlung des örtlichen Codes öffentliche Informationen enthalten.

4. Verfahren nach Anspruch 2, **dadurch gekennzeichnet, dass** die Identifizierer Seriennummern oder andere Identifizierungs-Codes enthalten, die für einen Benutzer zugänglich sind, und wobei die Daten von dem Senkengerät, die in der Hash-Berechnung benutzt werden, einen öffentlichen Schlüssel enthalten.

5. Verfahren nach Anspruch 2, **dadurch gekennzeichnet, dass** die Daten für das Quellen- und Senkengerät eine einzigartige Identifikation des Quellengeräts und einen öffentlichen Verschlüsselungsschlüssel für das Senkengerät enthalten.

6. Verfahren nach Anspruch 1, **dadurch gekennzeichnet, dass** das Quellengerät kommuniziert, ob das Quellengerät berechtigt ist zur Lieferung des Inhalts zu dem Senkengerät zu einem Benutzer, und absichtlich kommunizieren, ob der verglichene Zustimmungs-Code und der örtliche Code konsistent sind.

7. Verfahren nach einem der vorangehenden Ansprüche, **dadurch gekennzeichnet, dass** das Quellengerät aus einem Zugriffsgerät oder einem Mediaspieler gewählt ist.
